# EUROPEAN PATENT SPECIFICATION

(11) **EP 2 808 546 B1**
(45) Date of publication and mention of the grant of the patent: **25.04.2018**
(21) Application number: 13169508.2
(22) Date of filing: 28.05.2013
(51) Int. Cl.: F03D 13/20, F03D 13/25

(54) **Intermediate section, offshore wind generator and offfshore wind park**
Zwischenabschnitt, Offshore-Windgenerator und Offshore-Windpark
Section intermédiaire, générateur éolien offshore et parc éolien offfshore

(43) Date of publication of application: 03.12.2014
(73) Proprietor: Areva Wind GmbH, 27572 Bremerhaven (DE)
(72) Inventor: Janssen, Wilhelm, 26683 Saterland (DE)
(74) Representative: Prinz & Partner mbB

(56) References cited:
- EP-A1- 2 261 505
- WO-A2-2010/093259
- BE-A- 451 404
- DE-U1-202012 100 446
- US-A1- 2009 107 567

## Description

### FIELD OF THE INVENTION

The invention relates to an intermediate section for a supporting structure of a horizontal axis wind generator. Furthermore, the invention relates to an offshore wind generator and to an offshore wind park.

### BACKGROUND

Wind generators (also referred to as wind energy converters, wind turbines or wind power plants) have a supporting structure, which is based on a foundation and carries a nacelle on top. The nacelle accommodates a generator, which is coupled to a rotor. A wind generator comprises a sub-system having a variety of modules, which contribute to the functionality of the wind generator. These modules may be for example: a converter, switching cabinets, air conditioning modules etc.

Document US 2012/0139256 A1 discloses a preassembled power module, which comprises a variety of modules of the sub-system of the wind generator. The power module is arranged beside the foot of a tower of the wind generator. In particular for offshore wind generators, it may be, however, desirable to arrange almost the entire sub-system in an interior space of the wind generator's tower. However, not only the mere number of modules but also their weight and volume demands for a considerable interior space inside the tower. Document WO 2010/103114 A1 discloses a tower section of a wind generator having a plurality of internal stages for the electric equipment. The interior space inside the tower section is still very limited and consequently, it is likely that a number of platforms have to be arranged one above the other to fit all necessary modules of the sub-system. This concept may lead to high manufacturing costs of the tower section. Furthermore, it may be still a technically challenging task to arrange the voluminous modules inside the tower segment while safeguarding a sufficient workspace and fulfilling the safety requirements. This is particularly true for high power wind generators, such as offshore wind generators.

EP 2 261 505 A1 discloses a wind power installation comprising a frame and an electricity pylon comprising near ground level an at least partly pyramid shaped basis for supporting a mast carrying cable supporting arms. The basis comprises supports anchored in foundation elements. The frame comprises supporting members which during assembling are mountable over the basis of said electricity pylon for fixing these supporting members to the foundation elements to provide an independent frame for carrying a wind turbine above cable supporting arms of said electricity pylon. The wind power installation comprises a compartment housing technical equipment for converting wind energy into electricity.

### SUMMARY

It is an object of the invention to provide an intermediate section for a supporting structure of a wind generator, an offshore wind generator and an offshore wind park, wherein the accommodation of modules of a sub-system of the wind generator in an interior space of the supporting structure of the wind generator is facilitated.

In one aspect of the invention, an intermediate section for a supporting structure of a horizontal axis wind generator is provided. The intermediate section comprises an upper mount and a lower mount. The upper mount is configured for coupling the intermediate section to an upper section of the supporting structure. For example, this upper supporting structure may be a tower of a wind generator, which carries a nacelle at the top. The lower mount is configured for coupling the intermediate section to a lower section of the supporting structure of the wind generator. The lower section may be a part of the foundation of the wind generator. For example, when the wind generator is an offshore wind generator, the lower section may be a tripod which is funded in the sea. The upper and lower sections and the intermediate section are coupled in a substantially vertical direction so as to provide an integral supporting structure of the wind generator. Furthermore, the intermediate section has a size, which is considered in a substantially horizontal direction, wherein this size is greater than that of the upper and / or the lower section.

A size of the upper and lower section is considered at or near to a joint between the respective section and the intermediate section. When the intermediate section is for example coupled to an upper and substantially cylindrical leg of a tripod, which serves as a foundation, a diameter of the intermediate section is greater than the diameter of this leg and not of the entire tripod. The diameter of this leg may be for example considered at an upper connecting flange thereof. Similarly, when the wind generator comprises a tower as an upper supporting structure, a size of said upper supporting structure may be considered at a lower connecting flange, which is coupled to the upper mount of the intermediate section.

The intermediate section is furthermore configured to accommodate units of a sub-system of the wind generator. Within the context of this specification, a sub-system of the wind generator comprises electrical components, which are necessary for the medium voltage grid connection of the wind generator. These may be for example: converters, medium voltage switches or switching cabinets, transformers, control cabinets, etc. Furthermore, the sub-system may comprise supply modules or auxiliary modules of the wind generator. These may be for example: air treatment units, such a filter, an air conditioning unit, a crane, a hoist, etc.

Advantageously, the intermediate section forms an integral part of the supporting structure of the wind generator. In contrast to the prior art, its size may be selected independently from static or dynamic requirements for construction of the supporting structure. In other words, the size of the intermediate section may be selected only according to the space required by the modules of the sub-system, which are arranged in the interior space of the intermediate section. A size of the supporting structure, for example a diameter of a tower, depends of the static and dynamic calculation for a given load bearing capability. There may be a conflict of goals between an economic and sufficiently strong tower and the required interior space inside said tower. This conflict may be solved by either adapting the tower's diameter according to the space requirements of the modules of the sub-system or by vertically stacking the modules on a plurality floors inside the tower. Both solutions are unfavorable since they lead to high manufacturing costs. The intermediate section according to aspects of the invention, inter alia, solves this conflict of goals. There is no need for an adaption of the size or diameter of the upper supporting structure. Quite contrary to this, the intermediate section may serve as a transition piece between a foundation and the upper supporting structure. For example, a variety of towers having different diameters may be placed on similar foundation structures. The adaption of the various diameters of the different types of towers to the assumed similar diameter of the foundation may be performed by adapting the size of the respective upper and lower mounts of the intermediate section. There is neither a need for an adaption of the foundation nor of the towers themselves. When the intermediate section serves as a transition piece, a diameter of the upper mount and a diameter of the lower mount of the intermediate section may be different.

Furthermore, the intermediate section allows a sea cable, which serves as a power line for connection of the wind generator to the power grid, to be connected and commissioned before the upper supporting structure of the wind generator is erected. Advantageously, the wind generator may be supplied with energy prior to installation of the main tower.

The modules of the sub-system may be arranged on a single plane or floor inside the intermediate section. This facilitates the installation of the electrical components and will further significantly reduce the servicing costs. Due to its increased width, the intermediate section provides sufficient work space for service workers. A variety of large and voluminous modules of the sub-system may be arranged inside the intermediate section, nearly without almost any limitation. At a same time, the safety requirements, for example with respect to fire prevention or with respect to the electrical insulation may be easily met.

The intermediate section may be a pre-assembled or pre-manufactured part. This means that almost the entire sub-system of the wind generator may be installed inside the intermediate section at a manufacturing site. Subsequently, the entire pre-manufactured section is transferred or shipped to the construction site of the wind generator. This is particularly advantageous for erection of offshore wind generators. Construction works become more independent from the weather conditions and the modules are protected during transfer inside the intermediate section.

Advantageously, the sub-system of the wind generator, in particular the modules of the sub-system, is / are configured to be coupled to medium voltage grid connection operating at a transmission voltage, which is greater than 33 kV. In particular, the sub-system and the modules, respectively, may be configured to be coupled to a medium voltage grid having a transmission voltage of 66 kV. Furthermore, the sub-system and the modules may be configured for transmission voltages of more than 66 kV. The 66 kV-technology requires modules of the sub-system, which are heavier and more voluminous when compared to modules of the traditional 33 kV-technology. Advantageously, the intermediate section according to aspects of the invention offers a larger interior space for accommodation of these components, when compared to a tower section. The intermediate section allows the wind generator to be adapted or upgraded to 66 kV-technology. This is particularly advantageous for offshore wind generators.

In nowadays offshore wind parks, only about five wind generators are arranged in a string of wind generators, which is coupled to an offshore switching cabinet. This switching cabinet is the hub or node to the main power grid. A respective one of the wind generators in one string is coupled to each other via a sea cable, which serves as a power transmission line. The sea cable is typically operated at 33 kV. Due to line losses, the number of wind generators, which is connected to a single string, is limited to about five wind generators. In large offshore wind parks, this technical restriction demands for a high number of switching cabinets, which have to be arranged on offshore platforms. However, only a limited number of switching cabinets may be arranged on a single platform. Accordingly, a high number of transformer platforms are necessary for large offshore wind parks, which leads to high installation costs. Due to the application of a higher transmission voltage, for example of 66 kV, on the power transmission line between the transformer platform and the wind generators, more wind generators may be put in a single string. Consequently, fewer switching cabinets and transformer platforms are necessary, which results in significant cost savings for construction and operation of large offshore wind parks.

Based on 66 kV-technology, more than five, in particular six, seven, eight, nine, ten or even more than ten wind generators may be coupled to a single string. They may be connected to a common power line to supply a single switching cabinet on an offshore transformer platform. Advantageously, the intermediate section may be configured to accommodate the necessary medium voltage modules of the wind generator, which are suitable for 66 kV-technology.

In another aspect of the invention, the intermediate section comprises an internal supporting structure. In particular, the internal supporting structure may be configured to at least partially take up a load of a section of the wind generator, which is arranged above the intermediate section. In other words, the intermediate section forms an integral part of the supporting structure.

According to an advantageous embodiment of the invention, the intermediate section may be assembled from a plurality of sub-units. Based on this modular concept, the intermediate section may be easily tailored to the specific requirements of the particular wind generator. Furthermore, the modules of the sub-system of the wind generator may be classified according to their technical function, which contributes to the functionality of the wind generator. Each module may be assigned to a certain class of modules. Sub-units of the intermediate section may be supplied with modules of a single class of modules. For example, there may be classes: "power conversion", "generator supply modules" and "auxiliary modules". The class: "power conversion" may comprise the main power converters according to the desired technology, for example a 33 kV-converter or a 66 kV-converter. These modules may be pre-installed in designated sub-units. The other class: "generator supply modules" may comprise air treatment units, such as filters or an air conditioning and / or a converter. These modules may also be preinstalled in designated sub-units. Furthermore, in the class: "auxiliary modules", there may be a sub-unit, which comprises for example a crane, a hoist or an auxiliary transformer. Advantageously, a "modular tool kit" of sub-units for assembly of an intermediate section may be provided.

According to this modular concept, for example, the auxiliary modules may be suitable for both, wind generators of 33 kV-technology and those of 66 kV-technology. For manufacture of an intermediate section for 33 kV-technology, the power conversion sub-unit according to this technology is selected first. This is combined with a sub-unit for the auxiliary modules and with further sub-units according to the specific requirements. For manufacture of an intermediate section for 66 kV-technology, the power conversion sub-unit according to this technology is selected and subsequently combined with the identical sub-unit for the auxiliary modules. In other words, the sub-unit for the auxiliary modules may be used for manufacturing various intermediate sections. This modular concept may lead to cost savings due to economies of scale.

A variety of different intermediate sections may be manufactured by selecting the suitable pre-manufactured sub-units for subsequent assembly into the intermediate section. The intermediate section may be tailored to the specific requirements of the wind generator using the modular system. In particular, the sub-units may be arranged along a circumference of the intermediate section and may be coupled to each other.

The intermediate section may further include or provide a tower platform. For example, a roof of the intermediate section may serve as a tower platform. Advantageously, no additional tower platform, which serves as working space for service technicians, is required. Furthermore, the intermediate section may comprise a door for providing access to an interior of the intermediate section itself and for providing access to the interior of the supporting structure, for example of the tower. Advantageously, there is no need for integration of a door in one of the tower sections. This facilitates their manufacturing process. In particular, the intermediate section may have a polygonal or hexagonal shape, when considered in a substantially horizontal cross-section.

According to another aspect of the invention, an offshore wind generator may be provided, which has a supporting structure, in particular a tower, comprising an intermediate section according to aspects of the invention. The intermediate section may be arranged at a transition between a foundation structure and an upper supporting structure. In particular, the intermediate section may be arranged at a transition between a part of a sea foundation, which is arranged above the sea level, and the tower of the wind generator.

Same or similar advantages, which have been mentioned with respect to the intermediate section, apply to the offshore wind generator in a same or similar way and are therefore not repeated.

In another aspect of the invention, an offshore wind park comprising power switching cabinet on an offshore transformer platform is provided. The power switching cabinet is coupled to a string of wind generators according to aspects of the invention. In particular, more than five, for example six, seven, eight, nine, ten or more than ten wind generators may be coupled to a single string. Furthermore, the string of wind generators uses a common medium voltage power line, which may be a sea cable. The medium voltage grid may be operated at an electrical transmission voltage which is greater than 33 kV. In particular, the medium voltage grid may be operated at a transmission voltage of 66 kV or even higher.

Again, same or similar advantages, which have been mentioned with respect to the intermediate section, apply to the offshore wind park in a same or similar way and will not be repeated.

### BRIEF DESCRIPTION OF DRAWINGS

Further aspects and features of the invention ensue from the following description of the preferred embodiments of the invention with reference to the accompanying drawings, wherein
FIG.1 is a simplified perspective view showing a section of a wind generator having a supporting structure including an intermediate section according to an embodiment of the invention,
FIG. 2 is a simplified vertical cross sectional view of an intermediate section, which is arranged between a jacket foundation and a tower of a wind generator,
FIG. 3 is a simplified horizontal cross sectional view of an intermediate section according to an embodiment of the invention,
FIG. 4 is another simplified horizontal cross sectional view of an intermediate section according to an embodiment of the invention and
FIG. 5 is an offshore wind park comprising a plurality of offshore wind generators according to embodiments of the invention and an offshore transformer platform having a medium voltage switching cabinet.

### DETAILED DESCRIPTION OF EXAMPLE EMBODIMENTS

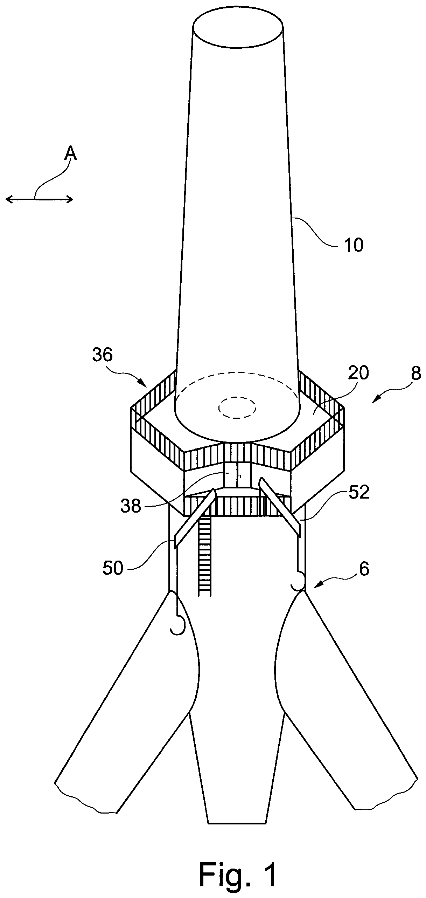

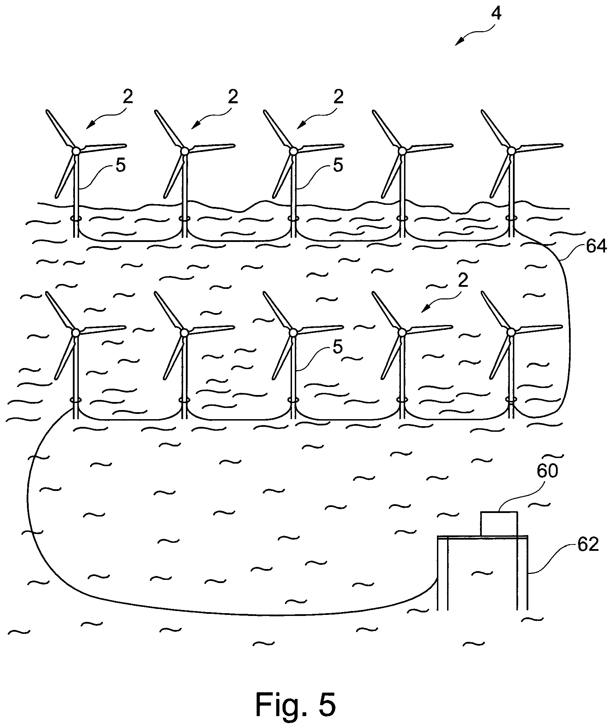

FIG. 1 is a simplified perspective of a section of an offshore wind generator. FIG. 5 shows an offshore wind park 4 comprising a plurality of wind generators 2. A more detailed view of the supporting structure of the wind generators 2 is shown in FIG. 1. There is a supporting structure 5 having a tripod 6, which is based on underwater foundations in the sea. Between the tripod 6 and the upper supporting structure 10, there is an intermediate section 8. This intermediate section 8 is coupled to the tripod 6 via a lower mount and carries the upper part of the wind generator. The upper supporting structure 10 is coupled to the intermediate section 8 via an upper mount. By way of an example only, the upper supporting structure 10 is a tower.

The intermediate section 8 is configured to accommodate modules of a sub-system of the wind generator. The sub-system may comprise medium voltage components for the medium voltage grid connection of the wind generator. These may be for example: a converter, medium voltage switches or switching cabinets, a transformer, control cabinets, etc. Furthermore, the sub-system may comprise air conditioning modules, generator supply modules and / or auxiliary modules.

According to aspects of the invention, nearly all electrical components of the wind generator, except for the main generator, which is located in the nacelle, may be arranged in an interior space of the intermediate section 8. The intermediate section 8 may be particularly suitable for accommodating medium voltage components, which are suitable for 66 kV-technology. Since these components are voluminous and heavy, a size of the intermediate section 8 may be adapted to those components. A size of the intermediate section 8 may be considered in a substantially horizontal direction A. Its size is greater than that of the lower and / or upper supporting structure. The size of these upper and lower sections is also considered in the horizontal direction A. In particular, the size of the upper and lower sections, i.e. the size of the tripod 6 and the upper supporting structure 10 is considered in the vicinity of the upper mount and the lower mount of the intermediate section 8, respectively.

The intermediate section 8 is configured to be an integral part of the supporting structure 5 of the wind generator. In other words, the intermediate section 8 may be configured to take up the load of the upper supporting structure 10, including all components, which are mounted thereto. These may be at least the nacelle, the generator, the rotor hub including the rotor blades.

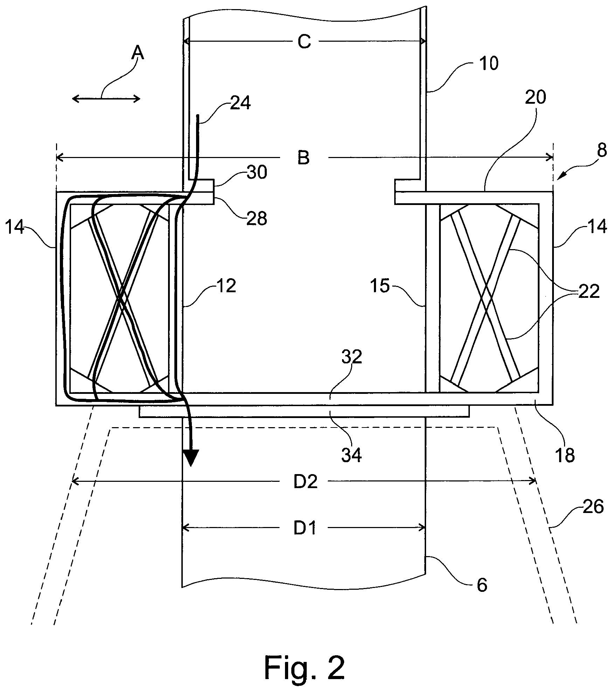

In order to provide an intermediate section 8 having a sufficiently high load bearing capability, it may comprise in internal supporting structure. This is illustrated in the cross sectional view of FIG. 2. The intermediate section 8 comprises internal beams, which act as a reinforcement for its mechanical structure. For example, the intermediate section 8 comprises inner and outer vertical beams 12, 14, which project between a floor 18 and a roof 20 in a substantially vertical direction. Furthermore, the internal supporting structure may comprise tilted beams 22, which project between a lower end of the outer vertical beams 14 and an upper end of the inner vertical beams 12 and vice versa. The beams 12, 14, 22 of the internal supporting structure are configured to take up a major part of the load from the upper supporting structure 10. A force flow 24 illustrates the transmission of this load to the foundation.

The size of the intermediate section 8 is determined in a substantially horizontal direction A. This size may be defined the diameter B of the intermediate section 8. This diameter B is greater than a diameter C of the upper supporting structure 10. A diameter C of the upper supporting structure 10 is considered in the vicinity of an upper mount 28 of the intermediate section 8. This upper mount 28 may be for example a flange, which is connected to a lower flange 30 of the upper supporting structure 10. Similarly, the diameter B of the intermediate section is greater than a first diameter D1 of the tripod 6, in particular of a section thereof, which is adjacent to a lower mount 32 of the intermediate section 8. This lower mount 32 may be a flange too. However, the floor 18 of the intermediate section 8 may be directly coupled to an upper connecting flange 34 of the tripod 6. Furthermore, and by way of an example only, the diameter B of the intermediate section 8 is greater than a second diameter D2 of a foundation jacket 26.

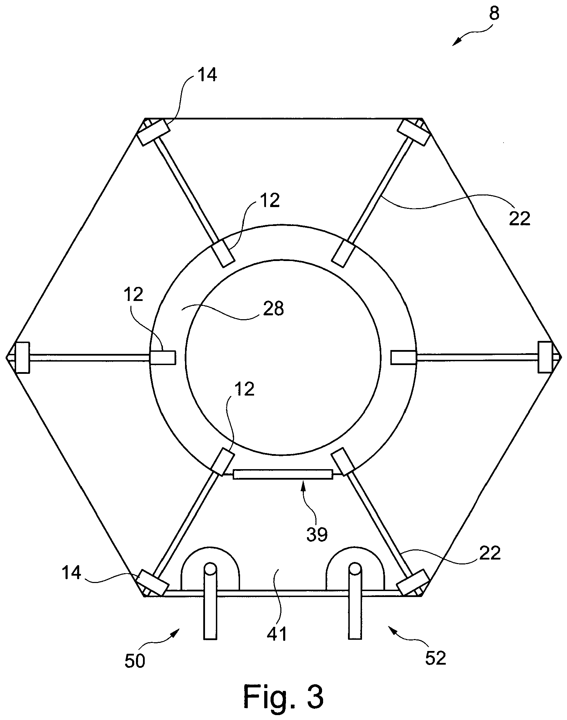

FIG. 3 is a simplified horizontal cross sectional view of the intermediate section 8. By way of an example only, the intermediate section 8 has a hexagonal shape, when considered in this cross section. The outer vertical beams 14 are arranged around the outer circumference of the intermediate section 8, while the inner vertical beams 12 are arranged near an inner circumference. The vertical beams 12, 14 are connected by a frame work, which is provided by the tilted beams 22 (see also FIG. 2). For clarity reasons, only some of the inner and outer beams 12, 14 and the tilted beams 22 are provided with reference numerals. In particular, the inner beams 12 may be configured to support an upper mount 28 for carrying the upper supporting structure 10.

The intermediate section 8 may be further configured to replace an outer platform, which is typically arranged on the tower of an offshore wind generator 2. Consequently, the intermediate section 8 may comprise a guard rail 36 (see FIG. 1). Furthermore, the intermediate section 8 may comprise a door 39 providing access to its interior space. One or more cranes 50, 52 for hoisting service technicians and / or material to and from the intermediate section 8 may be arranged on a lower platform 41. This is lower platform 41 may have a similar level as the floor 18. Furthermore, the roof 20 of the intermediate section 8, which serves as a service platform, may be used to pick up men, who have been evacuated from the nacelle.

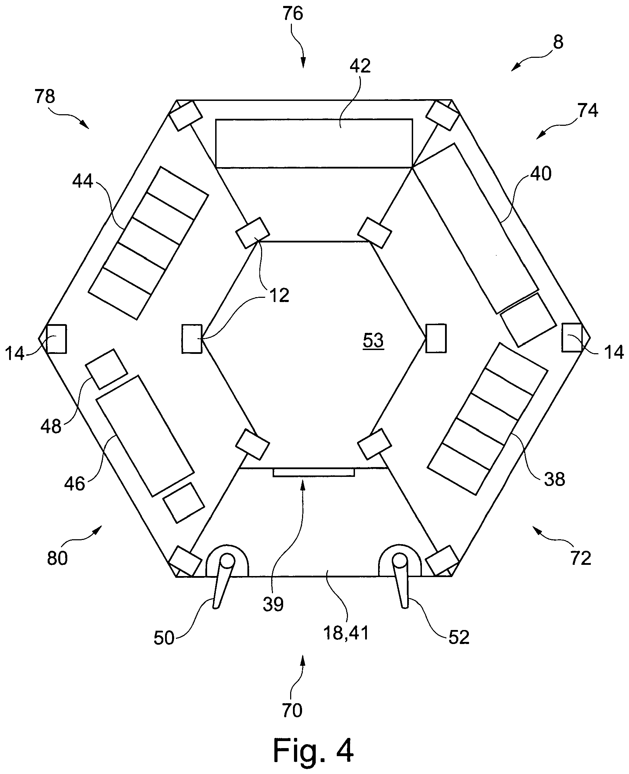

In FIG. 4, there is another horizontal cross sectional view of the intermediate section 8. A variety of different modules of a subsystem of the wind generator 2 may be accommodated inside the intermediate section 2. For example, switching cabinets 38, a first converter part 40 and a second converter part 42, medium voltage switches 44, a main transformer 46 and an auxiliary transformer 48 may be arranged inside the intermediate section 8. Furthermore, a main crane 50 and a hand driven crane 52 may be arranged on a lower platform 41, which may be provided by the floor 18 of the intermediate section 8. The interior space 53 of the intermediate section 8 may be entered through a door 39.

The intermediate section 8 may be assembled from a plurality of sub-units 70 - 80. For example, each of the six sections, which project between corresponding inner and outer beams 12, 14 along the circumference of the intermediate section 8, may form the sub-units 70 - 80. A first sub-unit 70 may comprise the door 39 and the cranes 50, 52, which are arranged on the lower platform 41. The neighboring sub-unit 72 (in counterclockwise direction) may comprise the electrical switching cabinets 38. A third sub-unit 74 comprises the first converter part 40. A fourth sub-unit 76 comprises the second converter part 42. The medium voltage switches 44 may be arranged in fifth sub-unit 78. A main transformer 46 and an auxiliary transformer 48 may be arranged in a sixth sub-unit 80.

According to an embodiment, a "tool kit" of sub-units 70 - 80 may be provided. The sub-units 70 - 80 may be selected according to the particular requirements profile of the intermediate section 8. In order to provide this modular tool kit, the modules of the sub-system may be classified according to their technical functionality. For example, there may be a first class, which refers to power conversion. The modules, which are assigned to this class, are for example the first converter part 40, the second converter part 42 and the medium voltage switching cabinet 44. The sub-units 70 - 80 may be configured to accommodate modules of a single class only. Furthermore, the sub-units may be assigned to a same class as the modules which are arranged in this sub-unit 70 - 80.

However, if high stability and strength requirements are to be fulfilled, it can be favorable to build the intermediate section in one piece.

In the embodiment of FIG. 4, the sub-units 74, 76 are assigned to the class "power conversion". Further classes of modules may be "generator supply modules" and "auxiliary modules". For example, main transformer 46 and the auxiliary transformer 48 are assigned to the class "generator supply modules". Similarly, the sub-unit 80 is assigned to the class "generator supply modules". The switching cabinet 38 and the cranes 50, 52 may be assigned to class "auxiliary modules". The sub-units 70 and 72 are also assigned to this class.

The sub-units 70 - 80 may be pre-manufactured, which means they may be fully equipped with the electrical components and may be fully wired. For subsequent assembly of the intermediate section 8, suitable sub-units 70 - 80 are selected according to the particular requirements of the wind generator 2.

FIG. 5 is a simplified perspective view showing an offshore wind park 4 comprising a plurality of offshore wind generators 2. For clarity reasons, only some of these are given reference numerals. The wind park 4 further comprises a medium voltage power switching cabinet 60, which is arranged at an offshore transformer platform 62. The wind generators 2 are coupled via a sea cable 64 to form a string of wind generators 2. Advantageously, the sea cable 64, which provides a power line between the wind generators 2, may be operated at an electrical transmission voltage, which is greater than 33 kV. In particular, the sea cable 64 is operated at a transmission voltage of 66 kV or even at a higher transmission voltage.

The electrical components of the wind generators 2, which are used for the connection to the medium voltage grid, such as for example the medium voltage switches 44 and the converter parts 40, 42, may be configured for operation at a transmission voltage of 66 kV. In comparison to the traditionally used electrical transmission voltage of 33 kV, a transmission voltage of 66 kV or even higher causes less electrical line losses on the sea cable 64. Mainly these line losses restrict the 33 kV-technology to a maximum number of approximately five wind generators 2, which may be coupled to a single string. In contrast to this, when the 66 kV-technology is applied, a string of wind generators 2 may comprise at least five, in particular six, seven, eight, nine, ten or even more than ten offshore wind generators 2. Furthermore, the 33 kV-technology is limited because only a limited number of medium voltage switching cabinets 60 may be arranged on a single offshore transformer platform 62. The 66 kV-technology is advantageous because fewer switching cabinets are necessary. More wind generators 2 may be integrated in a single string and therefore fewer transformer platforms 62 are necessary for operation of the wind park 4.

For example, for a wind park having 50 offshore wind generators 2 using 33kV-technology, about ten strings and ten switching cabinets 60 are needed. A similar number of offshore transformer platforms 62 are required. This causes high installation costs. If 66 kV-technology is applied, for example ten offshore wind generators 2 may be arranged in a single string. Only five switching cabinets 60 are required, which may be arranged on fewer offshore transformer platforms62. The reduced size and number offshore transformer platforms 62 significantly reduces the installation costs of the wind park 4.

## Claims

1. An intermediate section (8) for a supporting structure (5) of a horizontal axis wind generator, the section comprising an upper mount and a lower mount, wherein the upper mount is configured for coupling the intermediate section (8) to an upper section and the lower mount is configured for coupling the intermediate section (8) to a lower section of the supporting structure (10), in a substantially vertical direction, **wherein,** the intermediate section (8) has a size (B) in a substantially horizontal direction, which is greater than that of the upper and / or the lower section, wherein the intermediate section is configured to accommodate modules of a sub-system of the wind generator, **characterized in that** the intermediate section (8) is assembled from a plurality of sub-units (70-80).

2. The intermediate section (8) according to claim 1, further comprising an internal supporting structure (12, 14, 22).

3. The intermediate section (8) according to claim 2, wherein the internal supporting structure (12, 14, 22) is configured to at least partially take up a load of a section (10) of the wind generator, which is arranged above the intermediate section.

4. The intermediate section (8) according to anyone of the preceding claims, wherein a size of the upper mount (28) and the lower mount (32) is different.

5. The intermediate section (8) according to anyone of the preceding claims, wherein the sub-system of the wind generator, in particular the modules of the sub-system, is / are configured to be coupled to a medium voltage grid connection, which operates at a transmission voltage, which is greater than 33kV.

6. The intermediate section (8) according to anyone of the preceding claims, wherein the modules of the sub-system of the wind generator are classified according to their technical function, which contributes to the functionality of the wind generator, and each module of the sub-system is assigned to a certain class of modules, and wherein at least a part of the sub-units of the intermediate section comprises modules of a single class of modules.

7. The intermediate section (8) according to anyone of the preceding claims, wherein the sub-units are coupled to each other to be arranged along a circumference of the intermediate section (8).

8. The intermediate section (8) according to anyone of the preceding claims, wherein the intermediate section (8) has a polygonal outer shape, in particular a hexagonal shape, when considered in a substantially horizontal cross-section.

9. An offshore wind generator (2) having a supporting structure (8) comprising an intermediate section (8) according to anyone of the preceding claims.

10. The offshore wind generator (2) according to claim 9, wherein the intermediate section (8) is arranged at a transition between a foundation and an upper supporting structure (10) of the wind generator.

11. The offshore wind generator according to claim 9 or 10, wherein the intermediate section (8) is configured as a rescue platform used to pick up man, who have to escape via a rope from the nacelle, if the tower escape way is blocked.

12. An offshore wind park (4) comprising a power switching cabinet (60) which is arranged on an offshore transformer platform (62), wherein the power switching cabinet (60) is coupled to a string of wind generators according to anyone of claims 9 to 11.

13. The offshore wind park (4) according to claim 12, comprising at least five, in particular six, seven, eight, nine, ten or more than ten wind generators (2), which are coupled to a single string.

14. The offshore wind park (4) according to claim 12 or 13, wherein the string of wind generators (2) is coupled to a common medium voltage power grid, which is operated at an electrical transmission voltage, which is greater than 33kV.

## Patentansprüche

1. Mittelabschnitt (8) für eine Stützstruktur (5) einer Windkraftanlage mit horizontaler Achse, wobei der Abschnitt eine obere Halterung und eine untere Halterung umfasst, wobei die obere Halterung für die Kopplung des Zwischenabschnitts (8) an einen oberen Abschnitt und die untere Halterung für die Kopplung des Zwischenabschnitts (8) an einen unteren Abschnitt der Stützstruktur (10) in eine im Wesentlichen vertikale Richtung ausgebildet ist, wobei der Zwischenabschnitt (8) in eine im Wesentlichen horizontale Richtung eine Größe (B) hat, die größer ist als die des oberen und/oder des unteren Abschnitts, wobei der Zwischenabschnitt dazu ausgelegt ist, Module eines Subsystems der Windkraftanlage aufzunehmen, **dadurch gekennzeichnet, dass** der Zwischenabschnitt (8) aus mehreren Subeinheiten (70-80) zusammengesetzt ist.

2. Zwischenabschnitt (8) nach Anspruch 1, der ferner eine innere Stützstruktur (12, 14, 22) aufweist.

3. Zwischenabschnitt (8) nach Anspruch 2, wobei die innere Stützstruktur (12, 14, 22) dazu ausgebildet ist, eine Last eines Abschnitts (10) der Windkraftanlage, der über dem Zwischenabschnitt angeordnet ist, zumindest teilweise aufzunehmen.

4. Zwischenabschnitt (8) nach einem der vorhergehenden Ansprüche, wobei eine Größe der oberen Halterung (28) und eine Größe der unteren Halterung (32) unterschiedlich sind.

5. Zwischenabschnitt (8) nach einem der vorhergehenden Ansprüche, wobei das Subsystem der Windkraftanlage, insbesondere die Module des Subsystems, für die Kopplung an einen Mittelspannungsnetzanschluss ausgelegt ist/sind, der bei einer Übertragungsspannung von mehr als 33 kV betrieben wird.

6. Zwischenabschnitt (8) nach einem der vorhergehenden Ansprüche, wobei die Module des Subsystems der Windkraftanlage entsprechend ihrer technischen Funktion, die zur Funktionalität der Windkraftanlage beiträgt, klassifiziert sind und jedes Modul des Subsystems einer bestimmten Modulklasse zugeordnet ist, und wobei zumindest ein Teil der Subeinheiten des Zwischenabschnitts Module aus einer einzigen Modulklasse aufweist.

7. Zwischenabschnitt (8) nach einem der vorhergehenden Ansprüche, wobei die Subeinheiten so aneinander gekoppelt sind, dass sie an einem Umfang des Zwischenabschnitts (8) entlang angeordnet sind.

8. Zwischenabschnitt (8) nach einem der vorhergehenden Ansprüche, wobei der Zwischenabschnitt (8) in einem im Wesentlichen horizontalen Querschnitt gesehen eine polygonale Außenform, insbesondere eine hexagonale Form hat.

9. Offshore-Windkraftanlage (2), die eine Stützstruktur (8) mit einem Zwischenabschnitt (8) nach einem der vorhergehenden Ansprüche aufweist.

10. Offshore-Windkraftanlage (2) nach Anspruch 9, wobei der Zwischenabschnitt (8) an einem Übergang zwischen einer Basis und einer oberen Stützstruktur (10) der Windkraftanlage angeordnet ist.

11. Offshore-Windkraftanlage nach Anspruch 9 oder 10, wobei der Zwischenabschnitt (8) als Rettungsplattform zur Aufnahme von Personen ausgebildet ist, die über ein Seil aus der Gondel fliehen müssen, wenn der Fluchtweg des Turms blockiert ist.

12. Offshore-Windpark (4) mit einem Leistungsschaltschrank (60), der auf einer Offshore-Umspannplattform (62) angeordnet ist, wobei der Leistungsschaltschrank (60) an eine Reihe von Windkraftanlagen nach einem der Ansprüche 9 bis 11 gekoppelt ist.

13. Offshore-Windpark (4) nach Anspruch 12, der mindestens fünf, insbesondere sechs, sieben, acht, neun, zehn oder mehr als zehn Windkraftanlagen (2) umfasst, die zu einer einzelnen Reihe gekoppelt sind.

14. Offshore-Windpark (4) nach Anspruch 12 oder 13, wobei die Reihe von Windkraftanlagen (2) an ein gemeinsames Mittelspannungs-Stromnetz gekoppelt ist, das bei einer elektrischen Übertragungsspannung von mehr als 33 kV betrieben wird.

## Revendications

1. Tronçon intermédiaire (8) pour une structure de soutien (5) d'une éolienne à axe horizontal, le tronçon comprenant un support supérieur et un support inférieur, le support supérieur étant réalisé pour coupler le tronçon intermédiaire (8) à un tronçon supérieur, et le support inférieur étant réalisé pour coupler le tronçon intermédiaire (8) à un tronçon inférieur de la structure de soutien (10) dans un sens sensiblement vertical, le tronçon intermédiaire (8) présentant une taille (B) dans un sens sensiblement horizontal qui est supérieure à celle du tronçon supérieur et/ou inférieur, le tronçon intermédiaire étant réalisé de manière à loger des modules d'un sous-système de l'éolienne, **caractérisé en ce que** le tronçon intermédiaire (8) est assemblé à partir d'une pluralité de sous-unités (70-80).

2. Tronçon intermédiaire (8) selon la revendication 1, comprenant en outre une structure de soutien intérieure (12, 14, 22).

3. Tronçon intermédiaire (8) selon la revendication 2, la structure de soutien intérieure (12, 14, 22) étant réalisée de manière à absorber au moins partiellement une charge d'un tronçon (10) de l'éolienne qui est agencé au-dessus du tronçon intermédiaire.

4. Tronçon intermédiaire (8) selon l'une des revendications précédentes, la taille du support supérieur (28) et celle du support inférieur (32) étant différentes.

5. Tronçon intermédiaire (8) selon l'une des revendications précédentes, le sous-système de l'éolienne, en particulier les modules du sous-système, étant réalisé(s) pour le couplage à un raccord de réseau à moyenne tension qui fonctionne à une tension de transmission supérieure à 33kV.

6. Tronçon intermédiaire (8) selon l'une des revendications précédentes, les modules du sous-système de l'éolienne étant classifiés selon leur fonction technique contribuant à la fonctionnalité de l'éolienne et chaque module du sous-système étant associé à une classe de modules spécifique, et au moins une partie des sous-unités du tronçon intermédiaire comprenant des modules d'une seule classe de modules.

7. Tronçon intermédiaire (8) selon l'une des revendications précédentes, les sous-unités étant couplées les unes aux autres de manière à être agencées le long d'une circonférence du tronçon intermédiaire (8).

8. Tronçon intermédiaire (8) selon l'une des revendications précédentes, le tronçon intermédiaire (8), vu selon une section transversale sensiblement horizontale, présentant une forme extérieure polygonale, en particulier une forme hexagonale.

9. Éolienne offshore (2), présentant une structure de soutien (8) qui comprend un tronçon intermédiaire (8) selon l'une des revendications précédentes.

10. Éolienne offshore (2) selon la revendication 9, le tronçon intermédiaire (8) étant agencé à une transition entre une base et une structure de soutien supérieure (10) de l'éolienne.

11. Éolienne offshore selon la revendication 9 ou 10, le tronçon intermédiaire (8) étant réalisé sous forme de plateforme de sauvetage utilisée pour recueillir des personnes devant fuir de la nacelle par une corde lorsque le passage de sauvetage de la tour est bloqué.

12. Parc éolien offshore (4) comprenant une armoire de distribution de puissance (60) qui est agencée sur une plateforme de transformation offshore (62), l'armoire de distribution de puissance (60) étant couplée à une file d'éoliennes selon l'une des revendications 9 à 11.

13. Parc éolien offshore (4) selon la revendication 12, comprenant au moins cinq, en particulier six, sept, huit, neuf, dix ou plus de dix éoliennes (2) qui sont couplées en une seule file.

14. Parc éolien offshore (4) selon la revendication 12 ou 13, la file d'éoliennes (2) étant couplée à un réseau électrique à tension moyenne commun qui est mis en oeuvre à une tension de transmission électrique supérieure à 33kV.
